# EUROPÄISCHE PATENTANMELDUNG

(11) **EP 3 996 256 A1**
(43) Veröffentlichungstag der Anmeldung: **11.05.2022**
(21) Anmeldenummer: 21206766.4
(22) Anmeldetag: 05.11.2021
(51) Int. Cl.: H02K 5/20

(54) **ELEKTRISCHE MASCHINE MIT UMFANGSSEITIGEM KÜHLMANTEL**

(30) Priorität: 09.11.2020 DE 102020214044
(71) Anmelder: Valeo Siemens eAutomotive Germany GmbH, 91056 Erlangen (DE)
(72) Erfinder: Krais, Nils, 97422 Schweinfurt (DE); Söntgerath, Philipp, 97616 Bad Neustadt a.d.Saale (DE)

(57) **Zusammenfassung**

Es wird eine elektrische Maschine (1, 1a) angegeben, welche ein erstes Lagerschild (6, 6a) und ein zweites Lagerschild (7, 7a) aufweist, einen zwischen den beiden Lagerschilden (6, 6a, 7, 7a) angeordneten Stator (5) mit einem Statorblechpaket (10) und darin angeordneten Statorwicklungen (11) sowie einen im Stator (5) angeordneten Rotor (3) mit einer in den beiden Lagerschilden (6, 6a, 7, 7a) drehbar gelagerten Rotorwelle (2, 2a). Zudem umfasst die elektrische Maschine (1, 1a) eine umfangsseitig um den Stator (5) angeordnete und auf den beiden Lagerschilden (6, 6a, 7, 7a) montierte Statorhülle (8, 8a), die an jeder Stelle vom Stator (5) beabstandet ist. Darüber hinaus wird ein Fahrzeug (15) mit einer solchen elektrischen Maschine (1, 1a) angegeben.

## Beschreibung

### TECHNISCHES GEBIET

Die Erfindung betrifft eine elektrische Maschine und ein Fahrzeug mit einer elektrischen Maschine.

### STAND DER TECHNIK

Bei elektrischen Maschinen ist es bekannt, den Stator zu kühlen, um Abwärme, welche im Betrieb der elektrischen Maschine anfällt, aus dem Stator abzuführen. Bei einigen System werden dazu Kühlrohre im Stator vorgesehen, die Teil eines Kühlsystems sind und von einem Wärmeträger durchströmt werden. Das Kühlsystem kann weiterhin eine Pumpe zum Umwälzen des Wärmeträgers sowie einen Wärmetauscher umfassen. Nachteilig an den bekannten Verfahren zur Herstellung eines Stators ist, dass diese technisch relativ aufwändig sind und die Herstellung der elektrischen Maschine verteuern.

### OFFENBARUNG DER ERFINDUNG

Eine Aufgabe der Erfindung ist es daher, eine verbesserte elektrische Maschine und ein verbessertes Fahrzeug anzugeben. Insbesondere soll die Kühlung des Stators mit geringerem technischen Aufwand erfolgen können.

Die Aufgabe der Erfindung wird mit einer elektrischen Maschine gelöst, welche
- ein erstes Lagerschild und ein zweites Lagerschild umfasst,
- einen zwischen den beiden Lagerschilden angeordneten Stator mit einem Statorblechpaket und darin angeordneten Statorwicklungen,
- einen im Stator angeordneten Rotor mit einer in den beiden Lagerschilden drehbar gelagerten Rotorwelle und
- eine umfangsseitig um den Stator angeordnete und auf den beiden Lagerschilden montierte Statorhülle, die an jeder Stelle vom Stator beabstandet ist.

Mit anderen Worten wird zwischen der Statorhülle und dem Stator ein Stator-Kühlkanal gebildet, welcher von einem Kühlmedium durchflossen werden kann. Grundsätzlich kann die Statorhülle als Teil eines Gehäuses für die elektrische Maschine aufgefasst werden, diese hat jedoch, nachdem sie an jeder Stelle vom Stator beabstandet ist, keine tragende Funktion für den Stator. Die Hauptfunktion der Statorhülle ist stattdessen, den Stator-Kühlkanal zu begrenzen. Generell kann die Statorhülle aus einem Kunststoff gefertigt sein, insbesondere aus einem faserverstärkten Kunststoff.

Die genannte Aufgabe auch durch ein Fahrzeug mit wenigstens zwei Achsen gelöst, von denen wenigstens eine angetrieben ist, wobei der besagte Antrieb zumindest teilweise oder zeitweise durch die oben genannte elektrische Maschine der oben genannten Art erfolgt.

Mit Hilfe der vorgeschlagenen Maßnahmen können die eingangs genannten Nachteile überwunden werden. Insbesondere wird die Kühlung eines Stators mit geringerem technischen Aufwand ermöglicht. Konkret wird der Stator-Kühlkanal direkt von den Statorblechen des Statorblechpakets und der Statorhülle umgrenzt. Speziell geformte Kühlkanäle im Statorblechpaket oder zusätzliche Kühlrohre sind hierfür nicht vorgesehen. Die elektrische Maschine kann daher besonders einfach und leicht aufgebaut sein.

Besonders vorteilhaft ist es, wenn Öl als Kühlmedium vorgesehen ist, da dieses nicht zu Korrosion der Statorbleche führt. Beispielsweise kann als Kühlmedium Öl eines Getriebes verwendet werden, an welches die elektrische Maschine angeflanscht ist oder in welches die elektrische Maschine eingebaut ist. Abwärme der elektrischen Maschine und auch des Getriebes werden mit Hilfe des Schmieröls beispielsweise zu einem Wärmetauscher transportiert und dort an die Umgebung abgegeben. Auf diese Weise werden die elektrische Maschine und das Getriebe gekühlt. In diesem Fall ist ein kombinierter Kühl- und Schmierkreislauf und Öl als Kühlmedium und Schmiermittel vorgesehen. Das heißt, das Schmieröl fungiert nicht nur als Wärmeträger sondern auch als Schmiermittel. Das Öl erfüllt dann einen Mehrfachnutzen, in dem es das Getriebe schmiert und kühlt und weiterhin die elektrische Maschine kühlt. Dies ist zwar vorteilhaft, aber nicht zwingend. Denkbar ist auch, dass für Schmierung und Kühlung getrennte Kreisläufe vorgesehen sind. Auch in einem gesonderten Kühlkreislauf des Getriebes könnte jedoch Öl als Kühlmedium für die elektrische Maschine und das Getriebe vorgesehen sein.

In einer weiteren günstigen Ausführungsform der elektrischen Maschine sind in den beiden Lagerschilden Leitungen oder Kanäle für ein Kühlmedium angeordnet, die mit einem zwischen der Statorhülle und dem Stator gebildeten Stator-Kühlkanal hydraulisch verbunden sind. Dadurch wird in einem ersten Lagerschild ein Verteiler zum Stator-Kühlkanal gebildet und in einem zweiten Lagerschild ein Sammler, um das Kühlmedium, das den Stator-Kühlkanal passiert hat, zu sammeln und in den Rücklauf des Kühlkreislaufs rückzuführen.

Günstig ist es weiterhin, wenn die beiden Lagerschilde mit Hilfe von Zugankern mit dem Stator verbunden sind, wobei in jedem der beiden Lagerschilde beidseits von jedem Zuganker je eine Leitung in den Stator-Kühlkanal mündet. Auf diese Weise wird einerseits ein unerwünschtes Auseinanderwandern der Statorbleche vermieden, andererseits wird der Stator-Kühlkanal gleichmäßig vom Kühlmedium durchströmt.

Vorteilhaft ist es schließlich, wenn eine dem Stator zugewandte Oberfläche der Statorhülle in Form von zwei einander zugewandten Kegelstumpf-Mantelflächen gestaltet ist, wobei sich der zwischen der Statorhülle und dem Stator gebildete Stator-Kühlkanal von Stirnseiten des Stators zur Mitte hin zulaufend verengt. Einerseits kann die Statorhülle gut ausgeformt werden, wenn diese beispielsweise mithilfe eines Gießverfahrens hergestellt wird, andererseits wird das Kühlmedium im mittleren Bereich des Stators beschleunigt, wodurch der Wärmeeintrag in das Kühlmedium dort besonders groß ist. Dadurch wird der mittleren Bereich des Stators, der in der Regel auch eine temperaturkritische Zone darstellt, besonders gut gekühlt.

Die obigen Ausgestaltungen und Weiterbildungen der Erfindung lassen sich auf beliebige Art und Weise kombinieren.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine;
- Fig. 2: eine etwas detaillierter dargestellte elektrische Maschine in Seitenansicht;
- Fig. 3: die elektrische Maschine aus Fig. 2 im Längsschnitt;
- Fig. 4: die elektrische Maschine aus Fig. 2 im Querschnitt;
- Fig. 5: ein Detail des in der Fig. 3 dargestellten Längsschnitts und
- Fig. 6: eine schematische Darstellung eines Fahrzeugs mit einer elektrischen Maschine der vorgeschlagenen Art.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

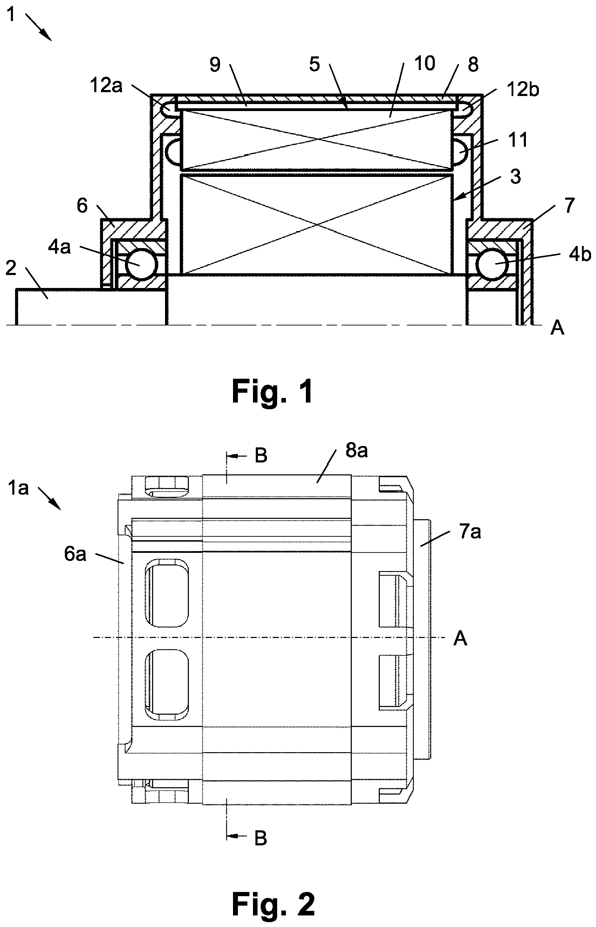

Fig. 1 zeigt einen Halbschnitt durch eine schematisch dargestellte elektrische Maschine 1. Die elektrische Maschine 1 umfasst, eine Rotorwelle 2 mit einem darauf sitzenden, hier nicht im Detail dargestellten, Rotor 3, wobei die Rotorwelle 2 mit Hilfe von (Wälz)lagern 4a, 4b um eine Drehachse A gegenüber einem Stator 5 drehbar gelagert ist. Konkret sitzt das erste Lager 4a in einem ersten Lagerschild 6 und das zweite Lager 4b in einem zweiten Lagerschild 7. Weiterhin umfasst die elektrische Maschine 1 eine umfangsseitig um den Stator 5 angeordnete und auf den beiden Lagerschilden 6, 7 montierte Statorhülle 8, die an jeder Stelle vom Stator 5 beabstandet ist. Zwischen dem Stator 5 und der Statorhülle 8 befindet sich demzufolge ein Stator-Kühlkanal 9.

Grundsätzlich kann die Statorhülle 8 als mittleres Gehäuseteil aufgefasst werden, diese hat jedoch, nachdem sie an jeder Stelle vom Stator 5 beabstandet ist, keine tragende Funktion für den Stator 5. Die Hauptfunktion der Statorhülle 8 ist stattdessen, den Stator-Kühlkanal 9 zu begrenzen. Generell kann die Statorhülle 8 aus einem Kunststoff gefertigt sein, insbesondere aus einem faserverstärkten Kunststoff.

Der Stator 5 weist mehrere, hier nicht im Detail dargestellte, Statorbleche auf, welche ein Statorblechpaket 10 beziehungsweise einen Stator-Grundkörper bilden, sowie im Statorblechpaket 10 angeordnete Statorwicklungen 11. Weiterhin sind im ersten Lagerschild 6 und im zweiten Lagerschild 7 Leitungen oder Kanäle 12a, 12b angeordnet, die mit dem Stator-Kühlkanal 9 zwischen dem Stator 5 und der Statorhülle 8 hydraulisch verbunden sind.

Der Stator-Kühlkanal 9 sowie die Leitungen oder Kanäle 12a, 12b sind Teil eines in der Fig. 1 nicht zur Gänze dargestellten Kühlsystems der elektrischen Maschine 1. Das Kühlsystem kann insbesondere auch eine Pumpe für einen Wärmeträger sowie einen Wärmetauscher aufweisen. Als Wärmeträger kann beispielsweise eine im Kühlsystem zirkulierende Wasser-Glykol-Mischung oder Öl verwendet werden.

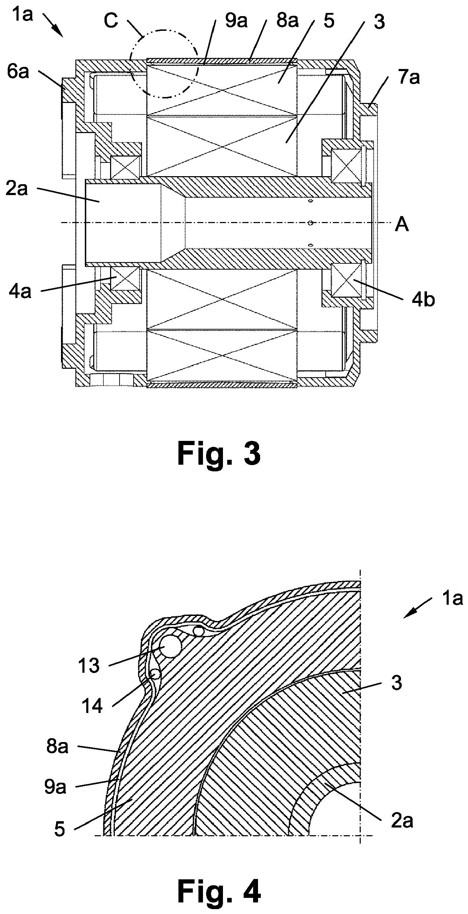

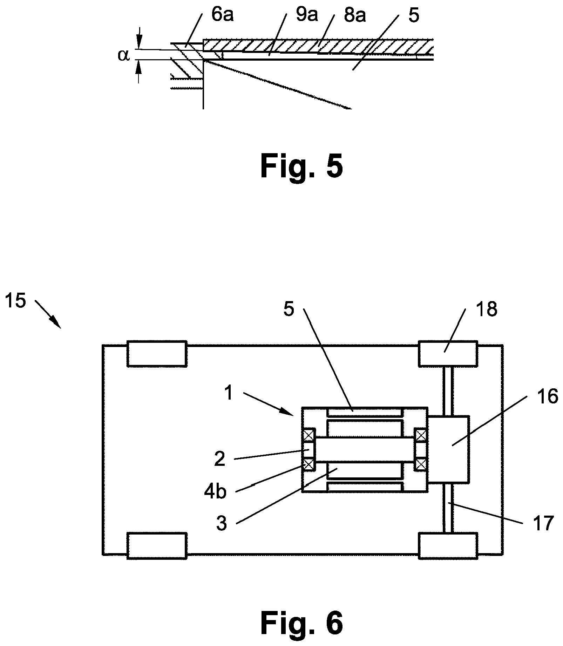

Die Fig. 2 bis 5 zeigen nun eine etwas detaillierter dargestellte elektrische Maschine 1a. Konkret zeigt die Fig. 2 die elektrische Maschine 1a in Seitenansicht, die Fig. 3 im Längsschnitt und die Fig. 4 im Querschnitt in der Schnittebene BB. Die Fig. 5 zeigt darüber hinaus ein Detail C des in der Fig. 3 dargestellten Längsschnitts.

Die elektrische Maschine 1a weist insbesondere eine etwas anders geformte Rotorwelle 2a auf, die in diesem Beispiel hohl ist, sowie etwas anders geformte Lagerschilde 6a, 7a.

In dem in den Fig. 2 bis 5 gezeigten Beispiel sind die beiden Lagerschilde 6a, 7a darüber hinaus mit Hilfe von Zugankern mit dem Stator 5 verbunden. In den Fig. 2 bis 5 sind die Zuganker nicht dargestellt, sondern nur Bohrungen 13, welche diese aufnehmen. Zusätzlich mündet in jedem der beiden Lagerschilde 6a, 7a beidseits von jedem Zuganker beziehungsweise beidseits jeder Bohrung 13 je eine Leitung 14 in den Stator-Kühlkanal 9a.

Darüber hinaus ist eine dem Stator 5 zugewandte Oberfläche der Statorhülle 8a bei der elektrischen Maschine 1a in Form von zwei einander zugewandten Kegelstumpf-Mantelflächen gestaltet, wobei sich der zwischen der Statorhülle 8a und dem Stator 5 gebildete Stator-Kühlkanal 9a von den Stirnseiten des Stators 5 zur Mitte hin zulaufend verengt. Demzufolge liegt zwischen dem Stator 5 und der Statorhülle 8a der Winkel α. Durch die vorgeschlagenen Maßnahmen kann die Statorhülle 8a einerseits gut ausgeformt werden, wenn diese beispielsweise mithilfe eines Gießverfahrens hergestellt wird, andererseits wird das Kühlmedium im mittleren Bereich des Stators 5 beschleunigt, wodurch der Wärmeeintrag in das Kühlmedium dort besonders groß ist. Dadurch wird der mittlere Bereich des Stators 5, der in der Regel eine temperaturkritische Zone darstellt, besonders gut gekühlt.

Die Fig. 6 zeigt schließlich die in ein Fahrzeug 15 eingebaute elektrische Maschine 1. Das Fahrzeug 15 weist wenigstens zwei Achsen auf, von denen wenigstens eine angetrieben ist. Konkret ist die elektrische Maschine 1 über ein optionales Getriebe 16 mit den Halbachsen 17 der Hinterachse verbunden. An den Halbachsen 17 sind schließlich die angetriebenen Räder 18 montiert. Der Antrieb des Fahrzeugs 15 erfolgt zumindest teilweise oder zeitweise durch die elektrische Maschine 1. Das heißt, die elektrische Maschine 1 kann zum alleinigen Antrieb des Fahrzeugs 15 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Elektrische Maschine (1, 1a), umfassend
- ein erstes Lagerschild (6, 6a) und ein zweites Lagerschild (7, 7a),
- einen zwischen den beiden Lagerschilden (6, 6a, 7, 7a) angeordneten Stator (5) mit einem Statorblechpaket (10) und darin angeordneten Statorwicklungen (11) und
- einen im Stator (5) angeordneten Rotor (3) mit einer in den beiden Lagerschilden (6, 6a, 7, 7a) drehbar gelagerten Rotorwelle (2, 2a),
**gekennzeichnet durch**
- eine umfangsseitig um den Stator (5) angeordnete und auf den beiden Lagerschilden (6, 6a, 7, 7a) montierte Statorhülle (8, 8a), die an jeder Stelle vom Stator (5) beabstandet ist.

2. Elektrische Maschine (1, 1a) nach Anspruch 1, **dadurch gekennzeichnet, dass** in den beiden Lagerschilden (6, 6a, 7, 7a) Leitungen oder Kanäle (12a, 12b) für ein Kühlmedium angeordnet sind, die mit einem zwischen der Statorhülle (8, 8a) und dem Stator (5) gebildeten Stator-Kühlkanal (9, 9a) hydraulisch verbunden sind.

3. Elektrische Maschine (1, 1a) nach Anspruch 2, **dadurch gekennzeichnet, dass** die beiden Lagerschilde (6, 6a, 7, 7a) mit Hilfe von Zugankern mit dem Stator (5) verbunden sind und in jedem der beiden Lagerschilde (6, 6a, 7, 7a) beidseits von jedem Zuganker je eine Leitung in den Stator-Kühlkanal (9, 9a) mündet.

4. Elektrische Maschine (1, 1a) nach einem der Ansprüche 1 bis 3, **dadurch gekennzeichnet, dass** eine dem Stator (5) zugewandte Oberfläche der Statorhülle (8, 8a) in Form von zwei einander zugewandten Kegelstumpf-Mantelflächen gestaltet ist, wobei sich der zwischen der Statorhülle (8, 8a) und dem Stator (5) gebildete Stator-Kühlkanal (9, 9a) von Stirnseiten des Stators (5) zur Mitte hin zulaufend verengt.

5. Elektrische Maschine (1, 1a) nach einem der Ansprüche 1 bis 4, **dadurch gekennzeichnet, dass** die Statorhülle (8, 8a) aus einem Kunststoff gefertigt ist, insbesondere aus einem faserverstärkten Kunststoff.

6. . Fahrzeug (15) mit wenigstens zwei Achsen, von denen wenigstens eine angetrieben ist, **dadurch gekennzeichnet dass** der besagte Antrieb zumindest teilweise oder zeitweise durch die elektrische Maschine (1, 1a) nach einem der Ansprüche 1 bis 5 erfolgt.
